# EUROPEAN PATENT SPECIFICATION

(11) **EP 3 649 506 B1**
(45) Date of publication and mention of the grant of the patent: **03.09.2025**
(21) Application number: 18733635.9
(22) Date of filing: 02.07.2018
(51) Int. Cl.: G02F 1/1333, E06B 9/24, G02F 1/1335

(54) **SWITCHABLE OPTICAL WINDOW COMPRISING A SHEET AND AT LEAST TWO SWITCHABLE OPTICAL ELEMENTS**
SCHALTBARES OPTISCHES FENSTER MIT EINER FOLIE UND MINDESTENS ZWEI SCHALTBAREN OPTISCHEN ELEMENTEN
FENÊTRE OPTIQUE COMMUTABLE COMPRENANT UNE FEUILLE ET PLUSIEURS ÉLÉMENTS OPTIQUES COMMUTABLES

(30) Priority: 04.07.2017 EP 17179542
(43) Date of publication of application: 13.05.2020
(73) Proprietor: Merck Patent GmbH, 64293 Darmstadt (DE)
(72) Inventor: VAN OOSTEN, Casper, 5581 CN Waalre (NL)
(74) Representative: Merck Patent Association
(86) International application number: PCT/EP2018/067728
(87) International publication number: WO 2019/007865

(56) References cited:
- EP-A1- 3 136 160
- WO-A1-2014/105674
- WO-A1-2014/166641
- WO-A1-2014/191233
- US-A1- 2014 063 433

## Description

The invention relates to a switchable optical window comprising a sheet and at least two switchable optical elements, wherein the sheet and the switchable optical elements are stacked and arranged parallel to each other and wherein each of the at least two switchable optical elements has a first portion and a second portion, wherein the optical properties of the second portion are changed by switching the switching layer of the at least two switchable optical elements between at least two different states and
wherein the first portion is not affected by switching of the switching layer. The review article by R. Baetens et al. "Properties, requirements and possibilities of smart windows for dynamic daylight and solar energy control in buildings: A state-of-the-art review", Solar Energy Materials & Solar Cells 94 (2010) pages 87-105 describes tintable smart windows. Smart windows can make use of several technologies for modulating the transmittance of light such as devices based on electrochromism, liquid crystal devices and electrophoretic or suspended-particle devices. Liquid crystal based devices employ a change in the orientation of liquid crystal molecules between two conductive electrodes by applying an electric field which results in a change of their transmittance.

In the field of liquid crystal displays (LCDs) it is known to place an additional piece of cover glass in front of a LCD module, wherein the cover glass comprises a printing around the border. The printing is arranged such that an area known as TFT ledge is hidden from the user. The TFT ledge is an area used for mounting electronics used to drive signals to control the individual pixels of the display. A LCD comprising a cover glass comprising a printing around the border is, for example, disclosed in US 2014/0063433 A1.

Further relevant prior art is disclosed in WO2014105674 A1, WO2014166641 A1, US2014063433 A1, EP3136160 A1 and WO2014191233 A1.

In smart windows, the device for modulating the transmittance of light, in the following referred to as switchable optical element, is often laminated to a carrier glass sheet for protection of the switchable element and for mechanical rigidity. In this lamination process, a glass sheet is used which is usually clear and may also be coated. In case of a coated glass sheet, the coating is usually applied over the full surface area. Often, these laminates are then mounted in such a way that an edge area on at least two edges of the laminate is mounted into a frame that obscures a border of the laminate having a width of between 3 and 25 mm.

The border of the frame obscures parts of the switchable optical element which are sensitive to degradation by light or areas that are aesthetically not attractive. Such areas include parts of the switchable optical element that are not switching such as sealants and/or electrical connectors.

It is an object of the invention to provide protection for sensitive parts and/or hiding aesthetically unattractive parts of a switchable optical element without the need for a mounting frame.

The claimed invention concerns a switchable optical window as defined in claim 1. The switchable optical window comprises amongst others a front sheet and a back sheet and at least two switchable optical elements each comprising in this order a first substrate layer, a switching layer and a second substrate layer. The at least two switchable optical elements each have a first portion and a second portion, wherein the optical properties of the second portion are changed by switching the switching layer of the at least two switchable optical elements between at least two different states and wherein the first portion is not affected by switching of the switching layer. The front sheet, the first substrate layer, the switching layer, the second substrate layer and the back sheet are stacked in this order and arranged parallel to each other. Further, the front sheet and the back sheet each have at least one first section which is non-transparent and at least one second section which is clear and transparent, wherein the at least one first section of the front sheet covers the first portion of each of the at least two switchable optical elements when viewed from a front side of the switchable optical window and wherein the at least one first section of the back sheet covers the first portion of each of the at least two switchable optical elements when viewed from a back side of the switchable optical window.

The switchable optical element is, for example, selected from a liquid crystal based element, a suspended particle foil element, an electrochromic element and combinations of at least two of these elements. In case of a liquid crystal based element, the switchable optical element preferably comprises at least one of a dye doped liquid crystal layer, a polymer stabilized chiral liquid crystal layer and a polymer dispersed liquid crystal layer. The respective switching layer is sandwiched between the first and second substrate layer.

Preferably, the state of the switching layer is controlled using an electric field which is applied by means of two electrodes. The electrodes are preferably transparent electrodes which are arranged on the first and second substrate layer in form of a coating. Usually, the coating is applied to the side of the substrate layer which is facing the switching layer.

Preferably, the electrodes are not patterned and/or structured so that they are contiguous. Thus, the entire switchable area (second portion) is addressed and switched at the same time by applying an electric field. In alternative embodiments the electrodes may be patterned to form individually addressable areas which may be switched independently from other areas by applying an electric field. Preferably, the electrodes are patterned such that 2 to 10 independently addressable areas are present.

In case of a liquid crystal based element, the switching layer comprises a liquid crystalline medium. The state of the liquid crystalline medium is controlled by an electric field which is applied by means of the two electrodes. Preferably, the liquid crystal based element additionally comprises an alignment film located on the first substrate layer and/or the second substrate layer. The alignment film is preferably arranged on the side facing the switching layer. If an electrode is also located on the respective substrate layer, the alignment film is preferably arranged on the electrode so that the alignment film is in direct contact with the switching layer. The alignment film may be rubbed in an alignment direction.

The two substrate layers and the liquid-crystalline medium are arranged as a cell wherein the liquid-crystalline medium is placed in the gap formed by the two control layers. The size of the gap is preferably from 1 µm to 300 µm, preferably from 3 µm to 100 µm and more preferably from 5 µm to 100 µm, and most preferably from 10 µm to 50 µm. The cell is usually sealed by means of glue lines located at or near the edges.

The switching layer of a liquid crystal based switchable element comprises a liquid-crystalline medium. A liquid-crystalline medium is defined as a substance having the properties of a liquid crystal. Typical liquid-crystalline media comprise at least one composition having elongated rod-shaped molecules. The liquid-crystalline media used in conjunction with the present invention have at least two states. The state of the liquid-crystalline medium is controlled using an electric field which is generated by an AC driving voltage applied between the two electrodes.

In suspended particle elements, the switchable layer comprises particles suspended in a liquid. Usually, the particles have a rod-like shape. Without an applied electric field, the suspended particles are randomly organized. In this state, the particles block and absorb light. When an electric field is applied, the suspended particles align and light may pass through the switching layer.

In electrochromic elements, a switching layer is used which is able to change its optical properties reversibly if an electric field is applied. This change of optical properties is associated with ion insertion and extraction processes. The switching layer is sandwiched between two substrates coated with electrodes and usually comprises in this order one or more cathodic electroactive layer(s), an ion conductor and an ion-storage film or one or more complementary anodic electroactive layers.

The switchable optical element has at least two switching states. The switching states may, for example, include a clear and transparent state, a dark state, a hazy state and mixtures of at least two of these states. Areas of the switchable optical element in which elements such as glue lines, electric connections and electric driving circuits are located are not affected by switching of the switching layer. Further, elements such as glue lines, electric connections and electric driving circuits may be sensitive to degradation by light. It is thus preferred to obscure these areas by means of the at least one first section of the at least one sheet which is non-transparent and/or opaque.

Usually, non-switching areas (first portion) of the switchable optical element such as the sealing (glue lines), electric connections and/or electric driving circuits are located at or near the edges of the switchable optical element. Thus, the at least one first section of the at least one sheet has preferably a shape matching the outer contour of the switchable optical element and has a width which is sufficiently wide to cover the non-switching areas. For example, in case of a rectangular switchable optical element the at least one first section is preferably designed as a rectangular frame with equal or larger dimensions of the switchable optical element and a width sufficient to cover the non-switchable areas.

The substrates are preferably optically transparent. The first and second substrate layers may be independently selected from a polymer or a glass. Suitable glass substrates include, for example, float glass, downdraw glass, chemically toughened glass, borosilicate glass and aluminosilicate glass.

Suitable polymer substrates include, for example, polyethylene terephthalate (PET), polyethylene naphthalate (PEN), polyvinylbutyral (PVB), polymethyl methacrylate (PMMA), polycarbonate (PC), polyimide (PI), COP (cyclic olefin polymers) and cellulose triacetate (TAC).

The substrates may be rigid or flexible. For example, flexible polymer films may be used as substrate.

The switchable optical window comprises a front sheet and a back sheet. The front sheet has a front surface and an opposing back surface. Likewise, the back sheet has a front surface and an opposing back surface. The terms "front surface" and "back surface" refer to the two largest surfaces of the front sheet and back sheet, respectively.

The front sheet and/or the back sheet are selected from a transparent material such as a glass or a polymer.

Suitable polymers include, for example, polymethyl methacrylate (PMMA), polycarbonate (PC), polyethylene terephthalate (PET) and cellulose triacetate (TAC).

Suitable glass materials include, for example, float glass or downdraw glass. The glass may also have been subjected to a pre-processing step like tempering, toughening and/or coating or sputtering. The glass can be, for example, soda-lime glass, borosilicate glass or aluminosilicate glass. A section of the at least one sheet is considered to be clear and transparent if the transmission is at least 50% in the visible spectrum and the haze is less than 6 %. The visible spectrum is defined as light having a wavelength of from 380 nm to 780 nm.

A section of the at least one sheet is considered to be non-transparent and/or opaque if the transmission of light in the visible spectrum is less than 50% or if the haze is larger than 20%.

Haze is caused by scattering of light occurring when light is passed through a material. The haze is measured using a BYK haze-gard i instrument from BYK Gardner. The measurement and calculation is performed according to the norm ASTM D 1003-00.

The at least two switchable optical elements are attached to the back surface of the front sheet. The at least one first section of the front sheet covers the first portion of the at least two switchable optical elements when the switchable optical window is viewed from the front side. Further, the at least two switchable optical elements are attached to the front side of the back sheet. The at least one first section of the back sheet covers the first portion of the at least two switchable optical elements when the switchable optical window is viewed from the back side.

It is preferred that the placements of the at least one first section and the at least one second section of the front sheet and the back sheet are identical.

Preferably, the base material of the at least one sheet is optically transparent. According to the claimed invention, the non-transparent first section is formed by applying a non-transparent material to the front surface of the back sheet and to the back surface of the front sheet. In an example not according to the claimed invention, the non-transparent first section is formed by performing a surface treatment on the front surface or the back surface of the front sheet and the back sheet.

A non-transparent material is applied to the front surface of the back sheet and to the back surface of the front sheet to form the at least one first section. Any color of the non-transparent material may be selected. Preferred colors are black and white.

The non-transparent material is reflective. A reflective material is defined as a material which reflects more than 50 % of the incident light in the visual spectrum.

Examples of reflective materials include metallic materials such as silver paint.

In an example not according to the claimed invention, the at least one first section is formed by a surface treatment applied to the front surface and/or the back surface of the front sheet and the back sheet sheet to form the at least one first section.

Suitable surface treatments include, for example, sandblasting or etching. By means of such a surface treatment the haze is increased so that a previously transparent sheet is made "frosty" and thereby hides any objects that are located behind the sheet.

In an example not according to the claimed invention, the non-transparent and/or opaque material is applied to the front surface of the front sheet and/or the back surface of the back sheet. If a surface treatment is performed, preferably the front surface of the front sheet and/or the back surface of the back sheet is/are subjected to the surface treatment. Thus, the at least one first section is formed on the side of the respective sheet which is facing away from the at least one switchable optical element (outward facing side).

Advantageously, by applying the non-transparent and/or opaque material to the outward facing side of the at least one sheet the obscuration of the first portion (non-switching area) of the at least one switchable optical element is optimized. Likewise, by applying a surface treatment to the outward facing side of the at least one sheet the obscuration of the first portion of the at least one switchable optical element is improved.

According to the claimed invention, the non-transparent material is applied to the back surface of the front sheet and the front surface of the back sheet. Thus, the at least one first section is formed on the side of the respective sheet which is facing towards the at least two switchable optical elements (inward facing side).

Advantageously, by applying the non-transparent material to the inward facing side of the at least one sheet, the material is positioned inside the obtained switchable optical window and is thus protected from the environment.

The at least two switchable optical elements may be attached to the at least one sheet by lamination or by use of an optically clear adhesive.

For lamination, a lamination sheet (interlayer) is arranged between the respective sheet and the at least two switchable optical elements. For example, the interlayer may be arranged between the back surface of the front sheet and the first substrate layer of the respective switchable optical element.

In a subsequent treatment, which usually involves application of heat and/or elevated pressure, the sheet, the interlayer and the switchable optical element are bonded.

Suitable lamination sheets include, for example, an ionoplast, ethylene vinyl acetate (EVA), polyvinyl butyral (PVB) or thermoplastic polyurethane (TPU).

A suitable ionoplast is available under the trade name SentryGlas.

Alternatively, the sheet and the at least two optical elements may be bonded by applying an adhesive at the interface between the second side of the sheet and the first substrate layer.

The switchable optical window comprises at least two switchable optical elements which are attached to the front sheet and the back sheet. The at least two switchable optical elements are all arranged in the same plane, thereby creating a switchable optical window having at least twice the area of one switchable optical element. In such a configuration, at least some of the edges of the switchable optical elements are not located near the edges of the switchable optical window, but are located in a viewing area of the switchable optical window. Thus, it is highly desirable that the edges of the switchable optical elements are obscured by the at least one first section of the front sheet and the back sheet.

The transmission through the switchable optical window for at least one of the states, preferably in a transparent state, is at least 40% for light in the visible spectrum. Preferably, the transmission is at least 50%. The visible spectrum is defined as light having a wavelength of from 380 nm to 780 nm.

The switchable optical window does not comprise any light sources. Thus, any light transmitted through the switchable optical windows stems from an external light source such as the sun or a home lighting apparatus. Optionally, the switchable optical window may further comprise a cover sheet which is attached to the front surface of the front sheet. The cover sheet may be attached by means of lamination or by means of an optically clear adhesive. Suitable materials for the cover sheet have been described with respect to the sheet.

The cover sheet may be used to provide additional mechanical strength and stability to the switchable optical window. This is particularly advantageous for switchable optical windows having dimensions larger than 1 meter.

In a further aspect of the invention a process for producing such a switchable optical window is provided as defined in claim 3.

The process comprises the steps of
a) providing the front sheet and the back sheet, the base material of the front sheet and the back sheet being clear and transparent,
b) forming the at least one first section on the back surface of the front sheet and on the front surface of the back sheet by applying the non-transparent material,
c) providing the at least two switchable optical elements,
d) attaching the first substrate of each of the at least two switchable optical elements to the frontemesheet and attaching the second substrate of each of the at least two switchable optical elements to the back sheet.

The base material of the front sheet and the back sheet is an optically clear and transparent material. The at least one first section which is non-transparent is then formed on such a base material by applying a non-transparent material**.**

Preferably, the non-transparent material is applied in a coating process, by printing a glass frit on the glass, in a screen printing process or in an inkjet printing process.

Suitable coating processes include spray coating.

Glass frit printing comprises selectively applying a glass frit to the sheet, for example in a screen printing process, and a subsequent heating step to bond the glass frit to the at least one sheet. The glass frit is preferably selected from a glass having a lower melting temperature than the material of the sheet.

Preferably, the front sheet and/or the back sheet is/are subjected to a temperature bake after applying the non-transparent material.

The temperature bake may be performed in an oven.

The at least two switchable optical elements may be attached to the front sheet and/or the back sheet by lamination or by use of an optically clear adhesive.

For lamination, a lamination sheet (interlayer) is preferably arranged between the respective sheet and the switchable optical element. In a subsequent treatment, which usually involves application of heat and/or elevated pressure, the respective sheet, the interlayer and the switchable optical element are bonded. Suitable lamination processes such as autoclave or vacuum bag processing are known in the technical field of laminated safety glass.

Alternatively, the respective sheet and the at least two switchable optical elements may be bonded by applying an adhesive at the interface between the respective sheet and the respective substrate layer of the at least two switchable optical elements. The adhesive may be applied to the respective sheet and/or to the respective substrate of the switchable optical element. The adhesive may, for example, be applied by means of spray coating.

Switchable optical windows comprising at least two switchable optical elements may be manufactured by placing an interlayer on a front sheet and then arranging the at least two switchable optical elements on the interlayer. Optionally, a further interlayer is placed onto the switchable optical elements followed by placing a back sheet onto the further interlayer. The resulting stack is then laminated by application of heat and/or pressure.

The back sheet is preferably processed in the same way as described for the front sheet. In particular, it is preferred that the front sheet and the back sheet have identical arrangements of the at least one first section and the at least one second section.

The switchable optical window is suitable for use in architecture, such as windows in buildings, and may also be used in transportation applications such as windows of vehicles.

### Example

A switchable optical window is made with multiple liquid crystal cells as switchable optical elements laminated between two glass sheets. A first section is formed on the front and back sheet by screen printing on the surface facing the LC cells such that the edges of the cells are obscured. The cells are laminated to the front and back glass sheets using Sentryglas ionoplast lamination material using a conventional lamination process.

### Brief description of the drawings

The drawings show:
- Figure 1: shows a cross section of a switchable optical window comprising one switchable optical element,
- Figure 2: shows a top view of the switchable optical window shown in Figure 1,
- Figure 3: shows a cross section of another switchable optical window comprising one switchable optical element,
- Figure 4: shows a cross section of an embodiment embodiment of the switchable optical window comprising two switchable optical elements, and
- Figure 5: shows a top view of the embodiment of the switchable optical window shown in Figure 4.

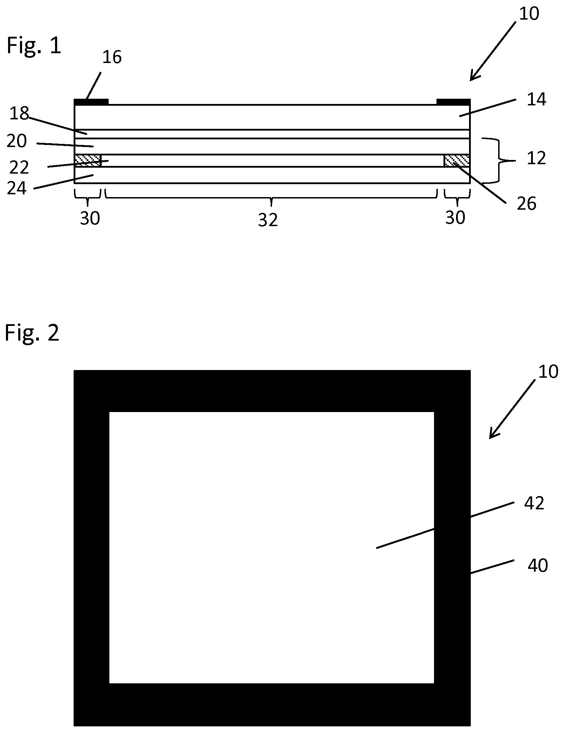

In figure 1 a switchable optical window 10, not according to the claimed invention, is shown in a schematic cross section view. The switchable optical window 10 comprises a switchable optical element 12 which is laminated to a front sheet 14. The front sheet 14 has a front surface, and an opposing back surface. The front surface faces away from the switchable optical element 12.

The switchable optical element 12 comprises in this order a first substrate layer 20, a switching layer 22 and a second substrate layer 24. In the example shown in figure 1, the switchable optical element 12 is a liquid crystal cell. The first substrate layer 20 and the second substrate layer 24 form the cell which is filled with a liquid crystal medium. The cell is sealed by means of glue lines 26.

For bonding of the switchable optical element 12 to the front sheet 14, a lamination sheet 18 (interlayer) is arranged between the first substrate 20 of the switchable optical element 12 and the back surface of the front sheet 14. The resulting stack has been subjected to a heat treatment. The areas marked with reference numeral 30 contain the glue lines 26. The optical properties in this first portion of the switchable optical element 12 cannot be changed. In a second portion of the switchable optical element 12, however, the optical properties may be influenced by applying an electric field. This second portion is marked with reference numeral 32. In order to obscure and thus hide the glue lines 26, a non-transparent material 16 is applied to the front surface of the front sheet 14. The front surface of the front sheet 14 faces away from the switchable optical element 12. The non-transparent material 16 on the front sheet 14 obscures the glue lines 26 when the switchable optical window 10 is viewed from the front side. The front side of the switchable optical window 10 is the side which is closest to the front sheet 14. The viewing direction is a direction perpendicular to the front surface of the front sheet 14.

The non-transparent material 16 is, for example, applied by means of screen printing.

As seen and described in figure 2, the non-transparent material 16 is applied in the form of a rectangular frame, thus forming a first section 40, which is non-transparent, and a second section 42, which is transparent.

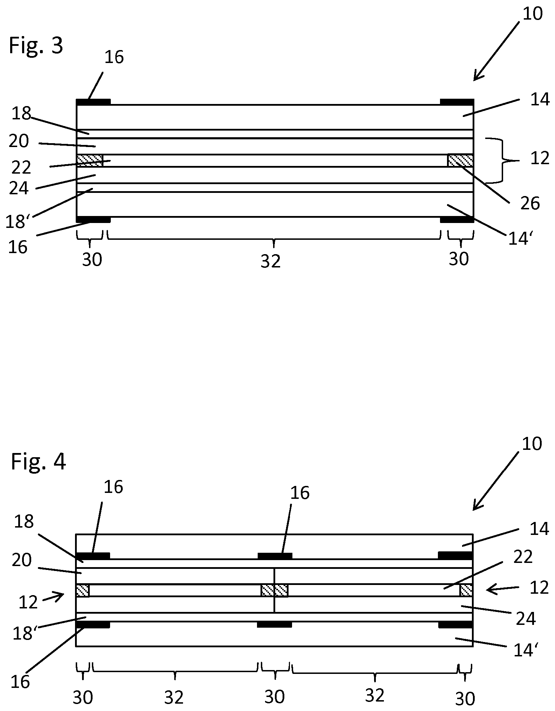

In figure 3 another switchable optical window 10, not according to the claimed invention, is shown in a schematic cross section view. The switchable optical window 10 comprises a switchable optical element 12 which is laminated to a front sheet 14 and a back sheet 14'. The front sheet 14 has a front surface, and an opposing back surface. The front surface faces away from the switchable optical element 12. Likewise, the back sheet 14' has a front surface and an opposing back surface, wherein the front surface faces towards the switchable optical element 12.

The switchable optical element 12 comprises in this order a first substrate layer 20, a switching layer 22 and a second substrate layer 24. In the example shown in figure 3, the switchable optical element 12 is a liquid crystal cell. The first substrate layer 20 and the second substrate layer 24 form the cell which is filled with a liquid crystal medium. The cell is sealed by means of glue lines 26.

For bonding of the switchable optical element 12 to the front sheet 14, a lamination sheet 18 (interlayer) is arranged between the first substrate 20 of the switchable optical element 12 and the back surface of the front sheet 14. Likewise, a further lamination sheet 18' is arranged between the second substrate 24 and the front surface of the back sheet 14'. The resulting stack has been subjected to a heat treatment.

The areas marked with reference numeral 30 contain the glue lines 26. The optical properties in this first portion of the switchable optical element 12 cannot be changed. In a second portion of the switchable optical element 12, however, the optical properties may be influenced by applying an electric field. This second portion is marked with reference numeral 32. In order to obscure and thus hide the glue lines 26, a non-transparent material 16 is applied to the front surface of the front sheet 14. The front surface of the front sheet 14 faces away from the switchable optical element 12. The non-transparent material 16 on the front sheet 14 obscures the glue lines 26 when the switchable optical window 10 is viewed from the front side. The front side of the switchable optical window 10 is the side which is closest to the front sheet 14. The viewing direction is a direction perpendicular to the front surface of the front sheet 14.

In order to also obscure the glue lines 26 when the switchable optical window 10 is viewed from the back side, the non-transparent material 16 is also applied to the back surface of the back sheet 14'. The back surface of the back sheet 14' faces away from the switchable optical element 12. The back side of the switchable optical window 10 is the side which is closest to the back sheet 14'. The viewing direction is a direction perpendicular to the back surface of the back sheet 14'.

The non-transparent material 16 is, for example, applied by means of screen printing.

In figure 4 an embodiment of the inventive switchable optical window 10 is shown in a schematic cross section view. The switchable optical window 10 comprises two switchable optical elements 12 which are laminated to a front sheet 14. A back sheet 14' is attached to the other side of the switchable optical elements 12.

As described with respect to figure 3, each of the switchable optical elements 12 comprise in this order a first substrate layer 20, a switching layer 22 and a second substrate layer 24. The switchable optical elements 12 are sealed by means of glue lines 26.

As described with respect to figure 3, the areas marked with reference numeral 30 contain the glue lines 26. The optical properties in this first portion of the switchable optical elements 12 cannot be changed. In a second portion of the switchable optical elements 12, however, the optical properties may be influenced by applying an electric field. This second portions are marked with reference numeral 32.

The non-transparent material 16 used to obscure the glue lines 26 is applied to the back surface of the front sheet 14 and to the front surface of the back sheet 14'.

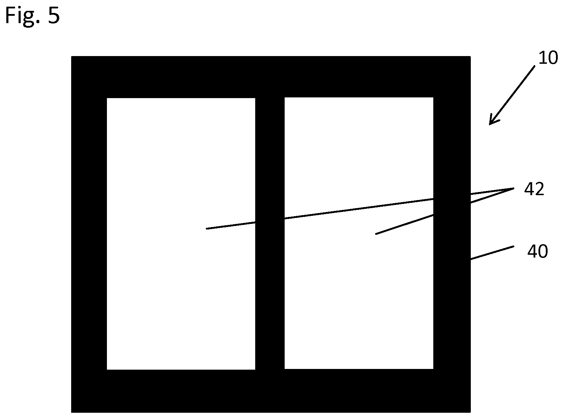

As can be seen in figure 5, the non-transparent material 16 is applied in the form of a two joined rectangular frames, thus forming a first section 40, which is non-transparent, and two second sections 42, which are transparent.

### List of reference numerals

- 10: switchable optical window
- 12: switchable optical element
- 14: front sheet
- 14': back sheet
- 16: opaque material
- 18: lamination sheet
- 18': further lamination sheet
- 20: first substrate
- 22: switching layer
- 24: second substrate
- 26: seal / glue line

- 30: first portion
- 32: second portion

- 40: first section
- 42: second section

## Claims

1. Switchable optical window (10) comprising a front sheet (14) and a back sheet (14') and at least two switchable optical elements (12), the at least two switchable optical elements (12) each comprising in this order a first substrate layer (20), a switching layer (22) and a second substrate layer (24),
the at least two switchable optical elements (12) each having a first portion (30) and a second portion (32),
wherein the optical properties of the second portion (32) are changed by switching the switching layer (22) of the at least two switchable optical elements (12) between at least two different states and wherein the first portion (30) is not affected by switching of the switching layer (22),
wherein the front sheet (14), the first substrate layer (20), the switching layer (22), the second substrate layer (24) and the back sheet (14') are stacked in this order and arranged parallel to each other, the front sheet (14) and the back sheet (14') each having at least one first section (40) which is non-transparent and at least one second section (42) which is clear and transparent, wherein the at least one first section (40) of the front sheet (14) covers the first portion (30) of each of the at least two switchable optical elements (12) when viewed from a front side of the switchable optical window (10) and wherein the at least one first section (40) of the back sheet (14') covers the first portion (30) of each of the at least two switchable optical elements (12) when viewed from a back side of the switchable optical window (10),
wherein the front sheet (14) has a front surface and an opposing back surface and the first substrate layer (20) of each of the at least two switchable optical elements (12) is attached to the back surface of the front sheet (14) and the back sheet (14') has a front surface and an opposing back surface and the second substrate layer (24) of each of the at least two switchable optical elements (12) is attached to the front surface of the back sheet (14'),
wherein the at least one first section (40) is obtained by applying a non-transparent material (16) to the front sheet (14) and the back sheet (14'),
wherein the at least one first section (40) is formed on the back surface of the front sheet (14) and on the front surface of the back sheet (14'), respectively,
wherein the light transmission through the switchable optical window (10) in the second portion (32) is at least 40 % over the visible spectrum for at least one of the states of the switchable optical elements (12),
wherein the first portion (30) of the at least two switchable optical elements (12) comprises a glue line (26) sealing the switching layer (22), electric connections and/or electronic driving circuits, and wherein the non-transparent material (16) is reflective.

2. The switchable optical window (10) of claim 1, **characterized in**
**that** the switchable optical elements (12) comprise at least one of a dye doped liquid crystal layer, a polymer stabilized chiral liquid crystal layer, a polymer dispersed liquid crystal layer, an electrochromic material layer and a suspended particle layer.

3. Process for producing a switchable optical window (10) according to any one of claims 1 to 2, the process comprising the steps of
a) providing the front sheet (14) and the back sheet (14'), the base material of the front sheet (14) and of the back sheet (14') being clear and transparent,
b) forming the at least one first section (40) on the back surface of the front sheet (14) and on the front surface of the back sheet (14') by applying the non-transparent material (16),
c) providing the at least two switchable optical elements (12),
d) attaching the first substrate (20) of each of the at least two switchable optical elements (12) to the front sheet (14) and attaching the second substrate (24) of each of the at least two switchable optical elements (12) to the back sheet (14').

4. The process of claim 3, **characterized in that** the non-transparent material (16) is applied in a coating process, by printing a glass frit on glass, in a screen printing process or in an inkjet printing process.

5. The process of claim 3 or 4, **characterized in that** the front sheet (14) and/or the back sheet (14') is/are subjected to a temperature bake after applying the non-transparent material (16).

6. The process of any one of claims 3 to 5, **characterized in that** the step of attaching comprises placing a lamination sheet (18) between the front sheet (14) and the at least two switchable optical elements (12) and placing a further lamination sheet (18') between the back sheet (14') and the at least two switchable optical elements (12) followed by a heating step.

7. The process of any one of claims 3 to 5, **characterized in that** the step of attaching comprises applying an optically clear adhesive to the front sheet (14) and/or the first substrate layer (20) of each of the at least two switchable optical elements (12) and applying an optically clear adhesive to the back sheet (14') and/or the second substrate layer (24) of each of the at least two switchable optical elements (12).

## Patentansprüche

1. Schaltbares optisches Fenster (10) umfassend eine vordere Scheibe (14) und eine hintere Scheibe (14') und mindestens zwei schaltbare optische Elemente (12),
wobei die mindestens zwei schaltbaren optischen Elemente (12) jeweils in dieser Reihenfolge eine erste Substratschicht (20), eine Schaltschicht (22) und eine zweite Substratschicht (24) umfassen, wobei die mindestens zwei schaltbaren optischen Elemente (12) jeweils einen ersten Anteil (30) und einen zweiten Anteil (32) aufweisen,
bei dem die optischen Eigenschaften des zweiten Anteils (32) durch Schalten der Schaltschicht (22) der mindestens zwei schaltbaren optischen Elemente (12) zwischen mindestens zwei verschiedenen Zuständen geändert werden und bei dem der erste Anteil (30) durch Schalten der Schaltschicht (22) nicht beeinflusst wird,
bei dem die vordere Scheibe (14), die erste Substratschicht (20), die Schaltschicht (22), die zweite Substratschicht (24) und die hintere Scheibe (14') in dieser Reihenfolge gestapelt und parallel zueinander angeordnet sind,
wobei die vordere Scheibe (14) und die hintere Scheibe (14') jeweils mindestens einen ersten Teilbereich (40), der nicht-transparent ist, und mindestens einen zweiten Teilbereich (42), der klar und transparent ist, aufweisen,
bei dem der mindestens eine erste Teilbereich (40) der vorderen Scheibe (14) bei Betrachtung von einer Vorderseite des schaltbaren optischen Fensters (10) den ersten Anteil (30) eines jeden der mindestens zwei schaltbaren optischen Elemente (12) abdeckt und bei dem der mindestens eine erste Teilbereich (40) der hinteren Scheibe (14') bei Betrachtung von einer Rückseite des schaltbaren optischen Fensters (10) den ersten Anteil (30) eines jeden der mindestens zwei schaltbaren optischen Elemente (12) abdeckt,
bei dem die vordere Scheibe (14) eine vordere Oberfläche und eine gegenüberliegende hintere Oberfläche aufweist und die erste Substratschicht (20) eines jeden der mindestens zwei schaltbaren optischen Elemente (12) auf der hinteren Oberfläche der vorderen Scheibe (14) angebracht ist und die hintere Scheibe (14') eine vordere Oberfläche und eine gegenüberliegende hintere Oberfläche aufweist und die zweite Substratschicht (24) eines jeden der mindestens zwei schaltbaren optischen Elemente (12) auf der vorderen Oberfläche der hinteren Scheibe (14') angebracht ist,
bei dem der mindestens eine erste Teilbereich (40) durch Aufbringen eines nicht-transparenten Materials (16) auf die vordere Scheibe (14) und die hintere Scheibe (14') erhalten wird,
bei dem der mindestens eine erste Teilbereich (40) auf der hinteren Oberfläche der vorderen Scheibe (14) bzw. auf der vorderen Oberfläche der hinteren Scheibe (14') gebildet wird,
bei dem die Lichttransmission durch das schaltbare optische Fenster (10) im zweiten Anteil (32) über das sichtbare Spektrum für mindestens einen der Zustände der schaltbaren optischen Elemente (12) mindestens 40 % beträgt,
bei dem der erste Anteil (30) der mindestens zwei schaltbaren optischen Elemente (12) eine die Schaltschicht (22) abdichtende Verklebung (26), elektrische Verbindungen und/oder elektronische Ansteuerkreise umfasst, und
bei der das nicht-transparente Material (16) reflektierend ist.

2. Schaltbares optisches Fenster (10) des Anspruchs 1, **dadurch gekennzeichnet, dass** die schaltbaren optischen Elemente (12) mindestens eines von einer farbstoffdotierten Flüssigkristallschicht, einer polymerstabilisierten Flüssigkristallschicht, einer polymerdispergierten Flüssigkristallschicht, einer Schicht aus einem elektrochromen Material und einer Schicht mit suspendierten Partikeln umfassen.

3. Verfahren zur Herstellung eines schaltbaren optischen Fensters (10) nach irgendeinem der Ansprüche 1 bis 2, wobei das Verfahren folgende Schritte umfasst
a) Bereitstellen der vorderen Scheibe (14) und der hinteren Scheibe (14'), wobei das Basismaterial der vorderen Scheibe (14) und der hinteren Scheibe (14') klar und transparent ist,
b) Bilden des mindestens einen ersten Teilbereichs (40) auf der hinteren Oberfläche der vorderen Scheibe (14) und auf der vorderen Oberfläche der hinteren Scheibe (14') durch Aufbringen des nicht-transparenten Materials (16),
c) Bereitstellen der mindestens zwei schaltbaren optischen Elemente (12),
d) Anbringen des ersten Substrats (20) einer jeden der mindestens zwei schaltbaren optischen Elemente (12) auf der vorderen Scheibe (14) und Anbringen des zweiten Substrats (24) eines jeden der mindestens zwei schaltbaren optischen Elemente (12) auf der hinteren Scheibe (14').

4. Verfahren des Anspruchs 3, **dadurch gekennzeichnet, dass** das nicht-transparente Material (16) in einem Beschichtungsverfahren, durch Drucken einer Glasfritte auf Glas, in einem Siebdruckverfahren oder in einem Tintenstrahldruckverfahren aufgebracht wird.

5. Verfahren des Anspruchs 3 oder 4, **dadurch gekennzeichnet, dass** die vordere Scheine (14) und/oder die hintere Scheibe (14') nach Aufbringen des nicht-transparenten Materials (16) einem thermischen Ausheizen unterworfen wird/werden.

6. Verfahren irgendeines der Ansprüche 3 bis 5, **dadurch gekennzeichnet, dass** der Schritt des Anbringens das Platzieren einer Laminierfolie (18) zwischen der vorderen Scheibe (14) und den mindestens zwei schaltbaren optischen Elementen (12) und das Platzieren einer weiteren Laminierfolie (18') zwischen der hinteren Scheibe (14') und den mindestens zwei schaltbaren optischen Elementen (12), gefolgt von einem Erhitzungsschritt, umfasst.

7. Verfahren irgendeines der Ansprüche 3 bis 5, **dadurch gekennzeichnet, dass** der Schritt des Anbringens das Aufbringen eines optisch klaren Klebstoffs auf die vordere Scheibe (14) und/oder die erste Substratschicht (20) eines jeden der mindestens zwei schaltbaren optischen Elemente (12) und das Aufbringen eines optisch klaren Klebstoffs auf die hintere Scheibe (14') und/oder die zweite Substratschicht (24) eines jeden der mindestens zwei schaltbaren optischen Elemente (12) umfasst.

## Revendications

1. Fenêtre optique commutable (10) comprenant une feuille avant (14) et une feuille arrière (14') et au moins deux éléments optiques commutables (12),
les au moins deux éléments optiques commutables (12) comprenant chacun selon cet ordre une première couche de substrat (20), une couche de commutation (22) et une seconde couche de substrat (24),
les au moins deux éléments optiques commutables (12) comportant chacun une première partie (30) et une seconde partie (32),
dans laquelle les propriétés optiques de la seconde partie (32) sont modifiées en commutant la couche de commutation (22) des au moins deux éléments optiques commutables (12) entre au moins deux états différents et dans laquelle la première partie (30) n'est pas affectée par la commutation de la couche de commutation (22), dans laquelle la feuille avant (14), la première couche de substrat (20), la couche de commutation (22), la seconde couche de substrat (24) et la feuille arrière (14') sont empilées selon cet ordre et sont agencées parallèlement les unes aux autres,
la feuille avant (14) et la feuille arrière (14') comportant chacune au moins une première section (40) qui est non transparente et au moins une seconde section (42) qui est claire et transparente, dans laquelle l'au moins une première section (40) de la feuille avant (14) recouvre la première partie (30) de chacun des au moins deux éléments optiques commutables (12) tel que vu depuis un côté avant de la fenêtre optique commutable (10) et dans laquelle l'au moins une première section (40) de la feuille arrière (14') recouvre la première partie (30) de chacun des au moins deux éléments optiques commutables (12) tel que vu depuis un côté arrière de la fenêtre optique commutable (10),
dans laquelle la feuille avant (14) comporte une surface avant et une surface arrière opposée et la première couche de substrat (20) de chacun des au moins deux éléments optiques commutables (12) est liée à la surface arrière de la feuille avant (14) et la feuille arrière (14') comporte une surface avant et une surface arrière opposée et la seconde couche de substrat (24) de chacun des au moins deux éléments optiques commutables (12) est liée à la surface avant de la feuille arrière (14'),
dans laquelle l'au moins une première section (40) est obtenue en appliquant un matériau non transparent (16) sur la feuille avant (14) et la feuille arrière (14'),
dans laquelle l'au moins une première section (40) est respectivement formée sur la surface arrière de la feuille avant (14) et sur la surface avant de la feuille arrière (14'),
dans laquelle la transmission de la lumière au travers de la fenêtre optique commutable (10) dans la seconde partie (32) est d'au moins 40 % au-delà du spectre visible pour au moins l'un des états des éléments optiques commutables (12),
dans laquelle la première partie (30) des au moins deux éléments optiques commutables (12) comprend une ligne de colle (26) qui scelle la couche de commutation (22), des connexions électriques et/ou les circuits de pilotage électronique, et
dans laquelle le matériau non transparent (16) est réfléchissant.

2. Fenêtre optique commutable (10) selon la revendication 1, **caractérisée en ce que** les éléments optiques commutables (12) comprennent au moins une couche parmi une couche de cristaux liquides dopés au(x) colorant(s), une couche de cristaux liquides chiraux stabilisés par polymère, une couche de cristaux liquides dispersés par polymère, une couche en matériau électrochroïque et une couche de particules suspendues.

3. Procédé de fabrication d'une fenêtre optique commutable (10) selon l'une quelconque des revendications 1 à 2, le procédé comprenant les étapes suivantes
a) la fourniture de la feuille avant (14) et de la feuille arrière (14'), le matériau de base de la feuille avant (14) et de la feuille arrière (14') étant clair et transparent,
b) la formation de l'au moins une première section (40) sur la surface arrière de la feuille avant (14) et sur la surface avant de la feuille arrière (14') en appliquant le matériau non transparent (16),
c) la fourniture des au moins deux éléments optiques commutables (12),
d) la liaison du premier substrat (20) de chacun des au moins deux éléments optiques commutables (12) sur la feuille avant (14) et la liaison du second substrat (24) de chacun des au moins deux éléments optiques commutables (12) sur la feuille arrière (14').

4. Procédé selon la revendication 3, **caractérisé en ce que** le matériau non transparent (16) est appliqué selon un processus de revêtement, en imprimant une fritte de verre sur du verre, selon un processus d'impression par sérigraphie ou selon un processus d'impression par jet d'encre.

5. Procédé selon la revendication 3 ou 4, **caractérisé en ce que** la feuille avant (14) et/ou la feuille arrière (14') est/sont soumise(s) à une cuisson sous température après l'application du matériau non transparent (16).

6. Procédé selon l'une quelconque des revendications 3 à 5, **caractérisé en ce que** l'étape de liaison comprend le placement d'une feuille de stratification (18) entre la feuille avant (14) et les au moins deux éléments optiques commutables (12) et le placement d'une autre feuille de stratification (18') entre la feuille arrière (14') et les au moins deux éléments optiques commutables (12) et est suivie par une étape de chauffage.

7. Procédé selon l'une quelconque des revendications 3 à 5, **caractérisé en ce que** l'étape de liaison comprend l'application d'un adhésif optiquement clair sur la feuille avant (14) et/ou sur la première couche de substrat (20) de chacun des au moins deux éléments optiques commutables (12) et l'application d'un adhésif optiquement clair sur la feuille arrière (14') et/ou sur la seconde couche de substrat (24) de chacun des au moins deux éléments optiques commutables (12).
